Europäisches Patentamt

European Patent Office

Office européen des brevets

(19)

(11) Veröffentlichungsnummer: **0 096 827**
**A2**

(12) **EUROPÄISCHE PATENTANMELDUNG**

(21) Anmeldenummer: 83105579.3

(22) Anmeldetag: 07.06.83

(51) Int. Cl.³: **F 24 J 3/04**

(30) Priorität: **11.06.82 DE 3222071**

(43) Veröffentlichungstag der Anmeldung: **28.12.83**
**Patentblatt 83/52**

(84) Benannte Vertragsstaaten: **AT BE CH DE FR LI LU NL**

(71) Anmelder: **Deutsche Forschungs- und Versuchsanstalt für Luft- und Raumfahrt e.V., D-5300 Bonn (DE)**

(72) Erfinder: **Mack, Robert, Dipl.-Ing., Nordbergstrasse 17, D-7100 Heilbronn (DE)**
Erfinder: **Buschulte, Winfried, Prof.Dr.-Ing., Berliner Strasse 27, D-7107 Neckarsulm (DE)**

(74) Vertreter: **Hoeger, Stellrecht & Partner, Uhlandstrasse 14c, D-7000 Stuttgart 1 (DE)**

(54) **Verfahren zum Betrieb einer Absorptionswärmepumpe.**

(57) Um bei einem Verfahren zum Betrieb einer Absorptionswärmepumpe mit einem Kocher (Austreiber), einem Verflüssiger, einer Drossel, einem Verdampfer und einem Absorber, aus welchem ein kalter Strom der reichen Lösung in den Kocher strömt, die bei der Beheizung des Kochers in Form der Rauchgase entstehenden Wärmeverluste zu vermeiden, wird vorgeschlagen, daß man die reiche Lösung zwischen dem Absorber und dem Kocher durch einen vom Rauchgas der Kocherbeheizung durchströmten Rauchgasrestwärmetauscher führt und ihr darin einen Teil der dem Rauchgas entzogenen Wärme zuführt.

EP 0 096 827 A2

0096827

A 44 894 u
u - 183
3. Mai 1982

Anmelderin: Deutsche Forschungs-
und Versuchsanstalt
für Luft- und Raumfahrt e.V.

5300 B o n n

B e s c h r e i b u n g

## Verfahren zum Betrieb einer Absorptionswärmepumpe

Die Erfindung betrifft ein Verfahren zum Betrieb einer Absorptionswärmepumpe mit einem Kocher (Austreiber), einem Verflüssiger, einer Drossel, einem Verdampfer und einem Absorber, aus welchem ein kalter Strom der reichen Lösung in den Kocher strömt.

Absorptionswärmepumpen werden aus Gründen der Energieeinsparung in zunehmendem Maße zu Heizzwecken eingesetzt. Mit ihnen kann die zum Antrieb benötigte Primärenergie weit besser ausgenutzt werden als bei den bisher meist eingesetzten elektrisch betriebenen Kompressionswärmepumpen. In den meisten Anwendungsfällen wird die Sorptionswärmepumpe mit fossilen Brennstoffen beheizt werden, d.h. es fallen Rauchgase recht hoher Temperatur (z.B. $180^{\circ}$C) als Verluste an.

Es ist Aufgabe der Erfindung, die Verluste durch die
Rauchgase weitgehend herabzusetzen und die aus den
Rauchgasen gewinnbare Energie dem Wärmepumpenkreislauf
so zuzuführen, daß der Wirkungsgrad des Wärmepumpenbetriebes erhöht wird.

Diese Aufgabe wird bei einem Verfahren der eingangs beschriebenen Art erfindungsgemäß dadurch gelöst, daß man
die reiche Lösung zwischen dem Absorber und dem Kocher
durch einen vom Rauchgas der Kocherbeheizung durchströmten Rauchgasrestwärmetauscher führt und ihr darin einen
Teil der dem Rauchgas entzogenen Wärme zuführt. Durch
die Einspeisung der dem Rauchgas entzogenen Wärme in die
den Absorber verlassende, kältemittelreiche  Lösung kann
die Temperatur des Absorbers niedrig gehalten werden,
wodurch sich insgesamt ein höherer Wirkungsgrad ergibt.

Bei einem ersten bevorzugten Ausführungsbeispiel ordnet
man den Rauchgasrestwärmetauscher stromaufwärts einer
Förderpumpe an, welche die reiche Lösung vom Absorber
zum Kocher fördert. Es ist jedoch gemäß einer anderen
bevorzugten Ausführungsform auch möglich, den Rauchgasrestwärmetauscher stromabwärts dieser Förderpumpe anzuordnen.

Besonders vorteilhaft ist es, wenn man den Strom der reichen Lösung aufteilt und nur einen der Teilströme durch
den Rauchgasrestwärmetauscher leitet. Beispielsweise kann
vorgesehen sein, daß man einen Teilstrom durch einen von
der aus dem Kocher austretenden armen Lösung durchflossenen Temperaturwechsler führt und anschließend in den Kocher einleitet, daß man diesen Teilstrom vor dem Eintreten in den Temperaturwechsler durch den Rauchgasrestwärmetauscher leitet und daß man den anderen Teilstrom durch einen der Abkühlung des im Kocher erzeugten Dampfes dienenden Rücklaufkühler in den Kocher einführt.

Bei einer besonders bevorzugten Ausführungsform ist vorgesehen, daß man einen Teilstrom durch einen von der aus dem Kocher austretenden armen Lösung durchflossenen Temperaturwechsler führt und anschließend in den Kocher einleitet und daß man den anderen Teilstrom durch den Rauchgasrestwärmetauscher und einen Rücklaufkühler zum Kocher leitet, wobei man den der Abkühlung des im Kocher erzeugten Dampfes dienenden Rücklaufkühler zusätzlich dadurch kühlt, daß man die Wärmeträgerflüssigkeit des Vorlaufs eines Heizsystems durch ihn hindurchführt.

Bei einer abgewandelten Ausführungsform ist vorgesehen, daß man einen Teilstrom durch einen von der aus dem Kocher austretenden armen Lösung durchflossenen Temperaturwechsler führt und anschließend in den Kocher einleitet und daß man den anderen Teilstrom durch den Rauchgasrestwärmetauscher hindurch unmittelbar in den Kocher einleitet.

Bei einer noch anderen Ausführungsform wird vorgesehen, daß man einen Teilstrom nach Durchlaufen des Rauchgasrestwärmetauschers unmittelbar in den Kocher einführt, während man den anderen Teilstrom durch einen der Abkühlung der im Kocher erzeugten Dämpfe dienenden Rücklaufkühler und anschliessend durch einen von der aus dem Kocher austretenden armen Lösung durchflossenen Temperaturwechsler hindurch in den Kocher einleitet.

Die nachfolgende Beschreibung bevorzugter Ausführungsformen der Erfindung dient im Zusammenhang mit der Zeichnung der näheren Erläuterung. Es zeigen:

Fig. 1 eine schematische Darstellung eines ersten bevorzugten Ausführungsbeispiels einer Absorptionswärmepumpe mit einem Rauchgasrestwärmetauscher am Auslaß des Absorbers;

Fig. 2 eine Darstellung entsprechend Fig. 1, wobei der Rauchgasrestwärmetauscher stromabwärts einer Förderpumpe angeordnet ist;

Fig. 3 eine Ansicht ähnlich Fig. 1, wobei der Rauchgasrestwärmetauscher in den Strömungsweg eines Teilstromes der reichen Lösung eingeschaltet ist;

Fig. 4 eine Ansicht ähnlich Fig. 3, wobei der Rauchgasrestwärmetauscher in den anderen Teilstrom eingeschaltet und im Rücklaufkühler eine zusätzliche Kühlung durch den Vorlauf eines Heizsystems vorgesehen ist;

Fig. 5 eine Ansicht ähnlich Fig. 3, wobei der Rauchgasrestwärmetauscher im anderen Teilstrom angeordnet ist, der nach Durchlaufen des  
Rauchgasrestwärmetauschers unmittelbar  
in den Kocher eingeleitet ist und

Fig. 6  eine Ansicht ähnlich Fig. 1, wobei der  
Rauchgasrestwärmetauscher in einen unmittelbar zum Kocher führenden Teilstrom  
eingeschaltet ist, während der andere  
Teilstrom über einen Rücklaufkühler und  
einen Temperaturwechsler zum Kocher geführt ist.

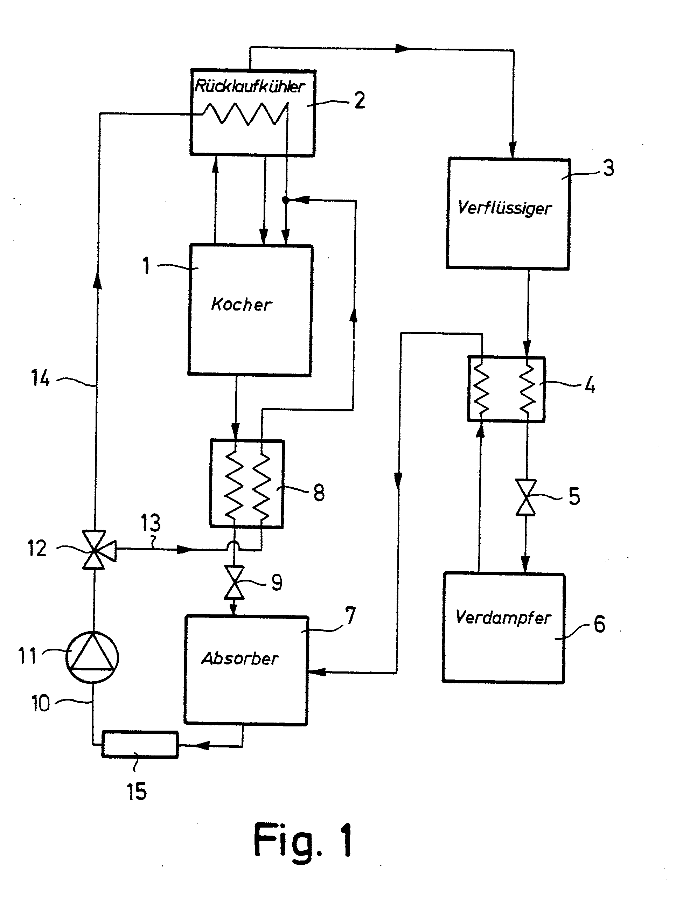

Die in Fig. 1 dargestellte Absorptionswärmepumpe umfaßt einen Kocher oder Austreiber 1, der mittels einer in der Zeichnung nicht dargestellten Wärmequelle aufgeheizt wird. Die  
Aufheizung erfolgt dabei durch Verbrennung eines fossilen  
Brennstoffes, wobei als Abfallprodukt hocherhitzte Rauchgase entstehen.

Im Kocher befindet sich ein Gemisch eines Kältemittels und  
eines Lösungsmittels, welches infolge der Erwärmung durch  
Verdampfen des Kältemittels getrennt wird. Das verdampfte  
Kältemittel durchquert einen Rücklaufkühler 2 und gelangt  
in einen Verflüssiger 3. Von dort strömt das verflüssigte  
Kältemittel durch einen Wärmetauscher 4 und eine Drossel 5  
zu einem Verdampfer 6. Vom Verdampfer 6 gelangt das wieder  
verdampfte Kältemittel durch den Wärmetauscher 4 in ein Absorber 7, dem vom Kocher 1 kältemittelarmes Lösungsmittel  
("arme Lösung") über einen Temperaturwechsler 8 und eine  
Drossel 9 zugeführt wird. Im Absorber werden Kältemittel und Lösung zu einer kältemittelreichen Lösung ("reiche Lösung") vereint. Diese kalte reiche Lösung gelangt über eine Leitung 10, in die eine Förderpumpe 11 eingeschaltet ist, zu einer Verzweigung 12, in der der Strom der reichen Lösung in zwei Teilströme zerlegt wird. Der erste Teilstrom fließt über eine Leitung 13 durch den Temperaturwechsler 8 in den Kocher, während der zweite Teilstrom durch eine Leitung 14 durch den Rücklaufkühler hindurch dem Kocher 1 zugeführt wird.

Zwischen den Absorber und die Förderpumpe ist ein Rauchgasrestwärmetauscher 15 eingeschaltet, der in aus der Zeichnung nicht ersichtlicher Weise von den Rauchgasen durchströmt wird, die bei der Beheizung des Kochers entstehen.

Beim Betrieb dieses Absorptionswärmepumpensystem wird die dem Rauchgas entzogene Wärmemenge über den Rauchgasrestwär-metauscher 15 dem den Absorber verlassenden Strom der reichen Lösung zugeführt, die dadurch schließlich im Kocher zur erneuten Abtrennung des Kältemittels nicht so stark erhitzt werden muß.

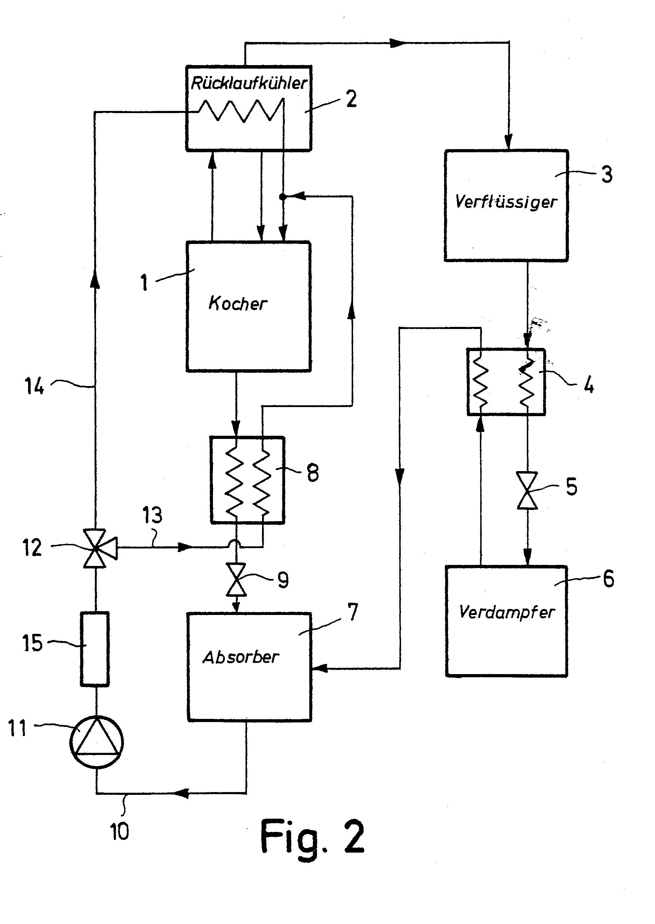

Die in Fig. 2 dargestellte Anordnung unterscheidet sich von der der Fig. 1 lediglich dadurch, daß der Rauchgasrestwärmetauscher 15 nicht stromaufwärts der Förderpumpe 11, sondern stromabwärts der Förderpumpe 11 angeordnet ist, im übrigen sind Aufbau und Wirkungsweise gleich.

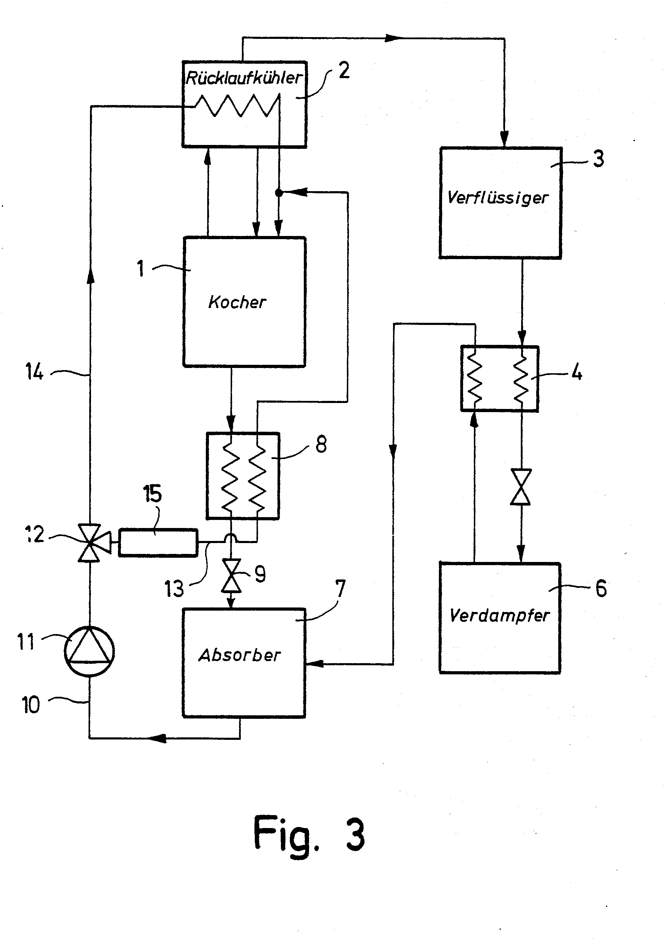

Bei dem in Fig. 3 dargestellten Ausführungsbeispiel ist der Rauchgasrestwärmetauscher 15 zwischen die Verzweigung 12 und den Temperaturwechsler 8 in die Leitung 13 eingeschaltet, so daß durch die Rauchgasrestwärme lediglich der den Temperaturwechsler durchsetzende Teilstrom erwärmt wird, während der andere Teilstrom eine Erwärmung lediglich im Rücklaufkühler erfährt, in dem durch diesen Teilstrom der aus dem Kocher ausgetriebene Dampfstrom abgekühlt und von mitgerissenem Lösungsmittel befreit wird.

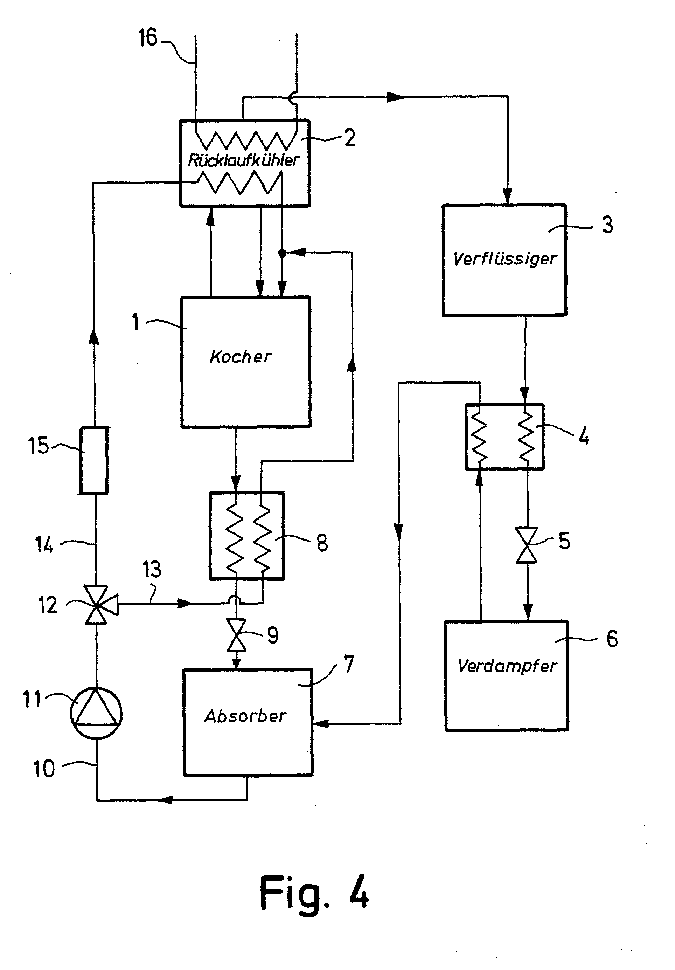

Umgekehrt ist in dem Ausführungsbeispiel der Fig. 4 im Unterschied zu dem der Fig. 3 der Rauchgasrestwärmetauscher 15 nicht in die Leitung 13, sondern in die dem anderen Teilstrom zugeordnete Leitung 14 zwischen Verzweigung 12 und Rücklaufkühler 2 eingeschaltet. In diesem Falle erfährt der zweite Teilstrom eine zweifache Erwärmung durch den Rauchgasrestwärmetauscher und den Rücklaufkühler, bevor er in den Kocher eintritt. In diesem Falle ist jedoch durch den Rücklaufkühler zusätzlich eine Heizleitung 16 hindurchgeführt, die sich im Vorlauf eines Heizungssystems befindet und von der entsprechenden Heizflüssigkeit durchflossen wird. Diese Heizflüssigkeit übernimmt einen erheblichen Teil der im Rücklaufkühler umgesetzten Wärme. Die Abkühlung im Rücklaufkühler läßt sich dabei durch die Mengendosierung im Heizungsvorlauf einstellen.

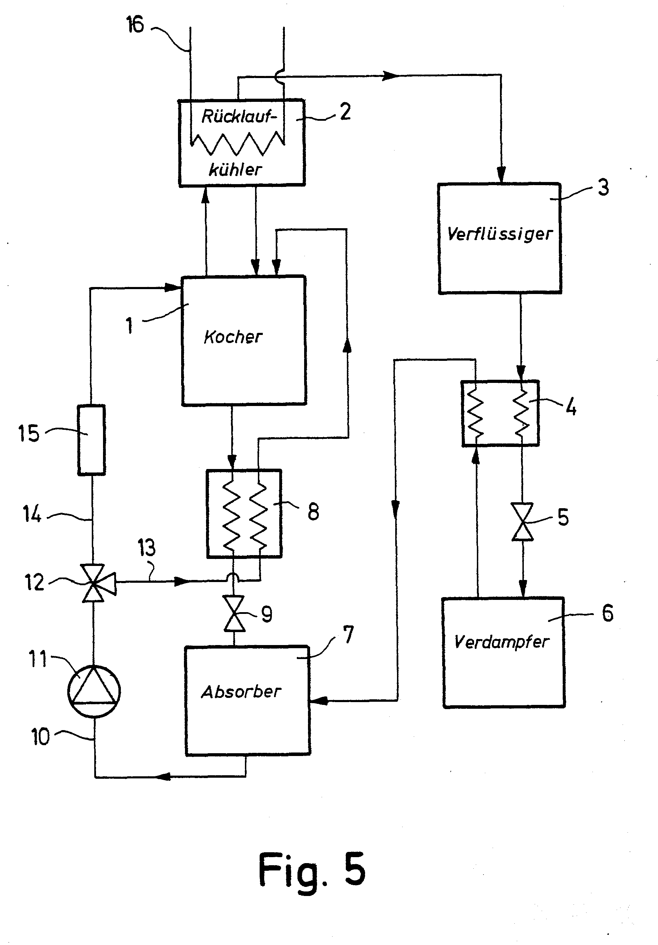

Das Ausführungsbeispiel der Fig. 5 unterscheidet sich von
dem der Fig. 4 im wesentlichen dadurch, daß der zweite
Teilstrom der reichen Lösung nach dem Durchlaufen des
Rauchgasrestwärmetauschers unmittelbar in den Kocher eingeführt wird; dadurch erfolgt die Abkühlung der aus dem
Kocher ausgetriebenen Dämpfe ausschließlich durch die
Heizleitung 16.

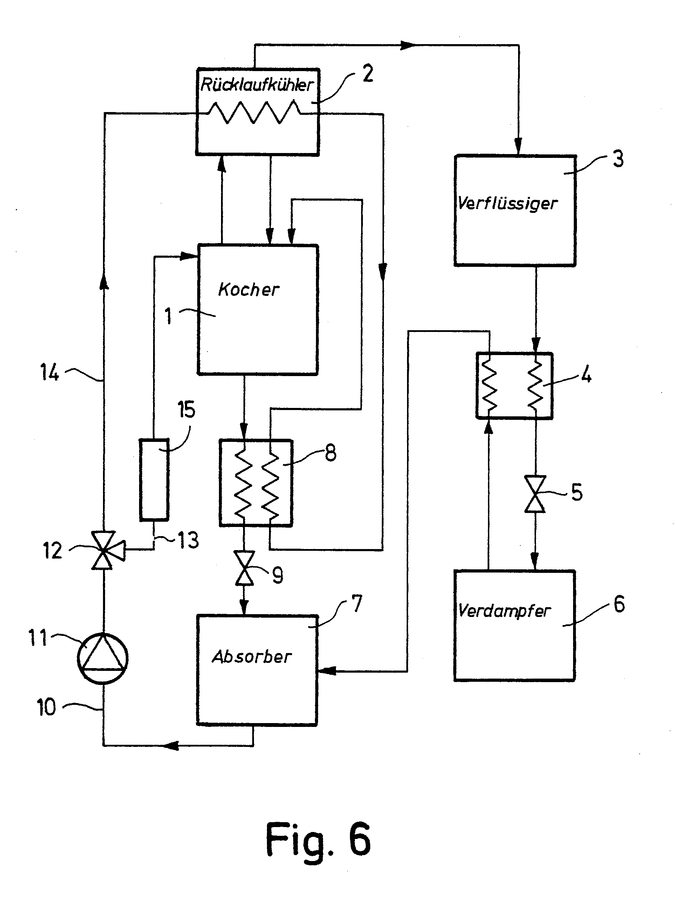

Im Ausführungsbeispiel der Fig. 6 gelangt der eine der
beiden Teilströme der reichen Lösung ebenso wie beim Ausführungsbeispiel der Fig. 5 nach dem Durchlaufen des
Rauchgasrestwärmetauschers unmittelbar in den Kocher.
Der andere Teilstrom durchfließt vor dem Eintritt in den
Temperaturwechsler den Rücklaufkühler, dem bei diesem Ausführungsbeispiel keine Heizleitung 16 zugeordnet ist.

In allen Fällen wird die dem Rauchgas entzogene Wärme dem
aus dem Absorber austretenden Strom der reichen Lösung zugeführt, wobei die dabei zugeführte Wärme, die sonst verlorengegangen wäre, die Heizleistung im Kocher herabsetzt
oder mittelbar dem Vorlauf eines Heizungssystems zugeführt
werden kann.

A 44 894 u
u - 183
3. Mai 1982

Anmelderin: Deutsche Forschungs-
und Versuchsanstalt
für Luft- und Raumfahrt e.V.

5300 B o n n

P a t e n t a n s p r ü c h e :

1. Verfahren zum Betrieb einer Absorptionswärmepumpe mit
   einem Kocher (Austreiber), einem Verflüssiger, einer
   Drossel, einem Verdampfer und einem Absorber, aus welchem ein kalter Strom der reichen Lösung in den Kocher
   strömt,
   d a d u r c h   g e k e n n z e i c h n e t , daß man
   die reiche Lösung zwischen dem Absorber und dem Kocher
   durch einen vom Rauchgas der Kocherbeheizung durchströmten Rauchgasrestwärmetauscher führt und ihr darin einen
   Teil der dem Rauchgas entzogenen Wärme zuführt.

2. Verfahren nach Anspruch 1, dadurch gekennzeichnet, daß
   man den Rauchgasrestwärmetauscher stromaufwärts einer
   Förderpumpe anordnet, welche die reiche Lösung vom Absorber zum Kocher fördert.

3. Verfahren nach Anspruch 1, dadurch gekennzeichnet, daß
   man den Rauchgasrestwärmetauscher stromabwärts einer Förderpumpe anordnet, welche die reiche Lösung vom Absorber zum Kocher fördert.


4.  Verfahren nach einem der Ansprüche 1 oder 3, dadurch
    gekennzeichnet, daß man den Strom der reichen Lösung
    aufteilt und nur einen der beiden Teilströme durch den
    Rauchgasrestwärmetauscher leitet.


5.  Verfahren nach Anspruch 4, dadurch gekennzeichnet, daß
    man einen Teilstrom durch einen von der aus dem Kocher
    austretenden armen Lösung durchflossenen Temperaturwechsler führt und anschließend in den Kocher einleitet, daß man diesen Teilstrom vor dem Eintreten in den
    Temperaturwechsler durch den Rauchgasrestwärmetauscher
    leitet und daß man den anderen Teilstrom durch einen
    der Abkühlung des im Kocher erzeugten Dampfes dienenden
    Rücklaufkühler in den Kocher einführt.


6.  Verfahren nach Anspruch 4, dadurch gekennzeichnet, daß
    man einen Teilstrom durch einen von der aus dem Kocher
    austretenden armen Lösung durchflossenen Temperaturwechsler führt und anschließend in den Kocher einleitet
    und daß man den anderen Teilstrom durch den Rauchgasrestwärmetauscher und einen Rücklaufkühler zum Kocher
    leitet, wobei man den der Abkühlung des im Kocher erzeugten Dampfes dienenden Rücklaufkühler zusätzlich dadurch kühlt, daß man die Wärmeträgerflüssigkeit des

0096827

Vorlaufs eines Heizsystems durch ihn hindurchführt.

7. Verfahren nach Anspruch 4, dadurch gekennzeichnet, daß man einen Teilstrom durch einen von der aus dem Kocher austretenden armen Lösung durchflossenen Temperaturwechsler führt und anschließend in den Kocher einleitet und daß man den anderen Teilstrom durch den Rauchgasrestwärmetauscher hindurch unmittelbar in den Kocher einleitet.

8. Verfahren nach Anspruch 4, dadurch gekennzeichnet, daß man einen Teilstrom nach Durchlaufen des Rauchgasrestwärmetauschers unmittelbar in den Kocher einführt, während man den anderen Teilstrom durch einen der Abkühlung der im Kocher erzeugten Dämpfe dienenden Rücklaufkühler und anschließend durch einen von der aus dem Kocher austretenden armen Lösung durchflossenen Temperaturwechsler hindurch in den Kocher einleitet.

-------------------------

Fig. 1

Fig. 2

Fig. 3

0096827

Fig. 4

**Fig. 5**

**Fig. 6**